# EUROPEAN PATENT SPECIFICATION

(11) **EP 2 391 514 B1**
(45) Date of publication and mention of the grant of the patent: **25.12.2013**
(21) Application number: 10710440.8
(22) Date of filing: 21.01.2010
(51) Int. Cl.: B60C 7/10, B60C 7/12

(54) **VEHICLE TYRE, MORE PARTICULARLY BICYCLE TYRE**
FAHRZEUGREIFEN, INSBESONDERE FAHRRADREIFEN
PNEU DE VÉHICULE, PLUS PARTICULIÈREMENT PNEU DE VÉLO

(30) Priority: 28.01.2009 IT TO20090054
(43) Date of publication of application: 07.12.2011
(73) Proprietor: Ramezzana, Flavio, 10073 Cirie' (TO) (IT)
(72) Inventor: Ramezzana, Flavio, 10073 Cirie' (TO) (IT)
(74) Representative: Robba, Pierpaolo
(86) International application number: PCT/IB2010/050275
(87) International publication number: WO 2010/086767

(56) References cited:
- EP-A- 0 025 674
- US-A- 4 310 042
- US-A- 4 324 279

## Description

### Technical Field

The present invention refers to a vehicle tyre, more particularly to a bicycle tyre.

### Background of the Invention

Vehicle tyres, more particularly bicycle tyres, are known which comprise a pneumatic inner tube that can be inflated by means of a pump to the desired pressure for supporting the vehicle weight.

These tyres often incur the risk of punctures, caused by strong impacts, stones, splinters, glasses, scrap and other rubbish that can be on the ground, and of consequent loss of pressure.

Punctures can represent a considerable danger and risk of accidents for the vehicle driver. In addition, punctures represent an annoying drawback, since they generally involve the changing of the tyre. As an alternative, there are kits for repairing tyres by means of adhesive patches or injectable sealants. Nevertheless, such reparations are seldom efficient and in general the tyre after the reparation can not maintain the established pressure for long periods.

Moreover, in case of competitions, punctures cause a great loss of time, so that they often compromises the competition result.

For the above reasons, tyres provided with self-supporting inner tubes have been developed in the past. Said inner tubes have such rigidity and strength that they provide for a load resistance that is enough for supporting the weight of the vehicle and of the user without the need of being inflated, and they are therefore at atmospheric pressure. A tyre provided with a self-supporting inner tube is disclosed, for instance, in US 4, 324, 279.

Accordingly, self-supporting inner tubes are free from drawbacks caused by punctures.

### Disclosure of the Invention

The Applicant has discovered that an important additional advantage correlated to the use of self -supporting inner tubes consists in that the choice of the material and structure of the tyre outer envelope can be made with wide degrees of freedom, since the needs in terms of load resistance of the tyre can be completely satisfied by the inner tube alone. More particularly, the outer envelope can be designed so as to optimize the vehicle performances in terms of friction reduction and smoothness and, consequently, of speed of the vehicle itself.

Thus, the use of self-supporting inner tubes - besides avoiding the risk of punctures - also allows to obtain improved performances and higher speeds.

Nevertheless, the speed increase exposes to the risk of producing a corresponding increase of the vibrations transmitted from the ground to the vehicle through the tyre, also because the self-supporting inner tube, due to its higher rigidity with respect to conventional inner tubes, is not capable of effectively absorbing vibrations. Such an increase of vibrations is particularly annoying in the case of bicycle tyres.

The main object of the present invention is therefore that of providing a vehicle tyre, more particularly a bicycle tyre, that is free from the risk of punctures and capable of providing for improved performances in terms of smoothness and speed and that - at the same time - can limit the transmission of vibrations to the vehicle and to the user.

This and other objects are achieved by the tyre as claimed in the appended claims. Thanks to the provision of a damping element between the rim of the vehicle wheel and the self-supporting inner tube, the transmission of vibrations from the tyre to the vehicle and to the user can be limited.

Advantageously, the presence of said damping element leaves wide degrees of freedom as to the choice of the structures, shapes and materials of the self-supporting inner tube and of the outer envelope surrounding said inner tube, so that the vehicle performances can be optimized.

For instance, the outer envelope can be differently designed each time in accordance with the final application of the vehicle.

### Brief Description of the Drawings

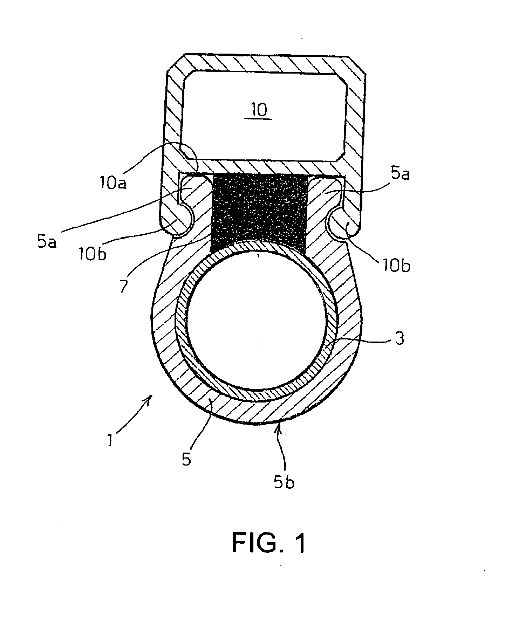

Further advantages and features of the invention will be described here below with reference to the attached Figure 1, showing a cross-section of the tyre according to the invention.

### Description of a Preferred Embodiment

With reference to attached Figure 1, an example of tyre according to the invention is shown, more particularly a bicycle tyre 1.

Said tyre 1 is coupled to the rim 10 of a bicycle wheel and it comprises:
- an inner tube 3, having a toroidal shape; and
- an outer envelope 5, surrounding said inner tube 3 and provided on one side with a tread 5b and on the opposite side with edges 5a suitable to be received in a corresponding seat 10a of said rim 10 and to co-operate with respective edges 10b of said seat 10a for holding said outer envelope against said rim.

More particularly, the inner tube 3 is a self-supporting inner tube, it has a load resistance sufficient for supporting the weight of the bicycle and of the user and the air contained therein is at atmospheric pressure.

The inner tube 3 can be designed according to any known technique for the manufacturing of self-supporting inner tubes. Techniques for the manufacturing of self-supporting inner tubes can be retrieved, for instance, in documents WO 2005/005168 or WO2007/035076. The outer envelope 5 can be designed with a wide freedom of choice since it has not necessarily to contribute to the load resistance of the tyre 1.

More particularly, the structure and the material of the outer envelope 5 could be chosen each time in accordance with the specific final application of the tyre 1 and with the user's needs. In other words, the structure and the material of the outer envelope 5 will be differently chosen depending on whether the tyre 1 is to be mounted - for instance - on a bicycle for track cycling, on a bicycle for road cycling or on a bicycle for cross-country cycling.

Advantageously, according to the invention the outer envelope 5 could be made of a material that allows to reduce the friction with the ground and increase the smoothness of the tyre 1, so as to improve the performances of the bicycle in terms of speed.

More particularly, during experimental tests, polyurethane-based materials have shown a high effectiveness in improving the tyre smoothness and allowing to obtain higher speeds with respect to known tyres.

According to the invention, the tyre 1 further comprises a damping element 7, provided adjacent to the inner tube 3, on the opposite side with respect to the tread 5b of the outer envelope 5, so that it is located between the inner tube 3 and the seat 10a of the rim 10 when the tyre 1 is mounted on the rim 10.

Said damping element 7 allows to absorb the vibrations transmitted from the ground through the outer envelope 5 and the inner tube 3 and, therefore, to prevent the further transmission of said vibrations to the vehicle and to the user.

In the illustrated preferred embodiment, said damping element 7 is a continuous toroidal ring, winding around the whole circumference of the rim 10, between said rim and the inner tube 3.

Alternatively, said damping element could also have a different shape. Furthermore, said damping element - instead of being made as a continuous element - could also consist of a plurality of discrete elements arranged along the circumference of the rim 10 and of the inner tube 3.

The damping element 7 can be provided integral with the inner tube 3. Alternatively, it can be made as a separate element, kept in the correct position between the inner tube 3 and the rim 10 by the outer envelope 5.

The damping element 7 can be made of any material having good elastic properties, so as to efficiently absorb vibrations. Said damping element will be preferably made of rubber. It is to be noted that, although in the illustrated example the damping element 7 has an homogeneous structure, it could also have a multi-layer structure, obtained by superposition of layers made of materials with different properties.

It is evident from the above disclosure that the tyre 1 allows to achieve the aimed objects, since:
- the self-supporting inner tube 3 avoids the risk of punctures and assures by itself the correct load resistance of the tyre 1;
- the outer envelope 5 can therefore be chosen in accordance with the sole requirement of the maximum smoothness and of the friction reduction, thus allowing for improved performances in terms of speed;
- the damping element 7 allows to absorb vibrations and prevent the transmission thereof from the inner tube to the vehicle and to the user.

It is also evident that the above description is given by way of example only and that several variants and modifications can be made without departing from the scope of the present invention as defined by the appended claims.

## Claims

1. Vehicle tyre (1), intended to be mounted on a vehicle wheel provided with a rim (10), said tyre comprising:
- an inner tube (3), having a toroidal shape; and
- an outer envelope (5), surrounding said inner tube (3) and provided on one side with a tread (5b) and on the opposite side with edges (5a) suitable to be received in a corresponding seat (10a) of said rim (10) for holding said outer envelope (5) against said rim (10),
wherein said inner tube is a self-supporting inner tube (3), **characterized in that** a damping element (7) is provided adjacent to or integral with said inner tube (3), on the opposite side with respect to the tread (5b) of said outer envelope (5).

2. Vehicle tyre (1) according to claim 1, wherein said damping element (7) is a continuous toroidal ring, winding around the whole circumference of said inner tube (3).

3. Vehicle tyre (1) according to claim 1, wherein said damping element (7) comprises a plurality of discrete elements arranged along the circumference of said inner tube (3).

4. Vehicle tyre (1) according to any of claims 1 to 3, wherein said damping element (7) is made of rubber.

5. Vehicle tyre (1) according to any of claims 1 to 3, wherein said damping element (7) has a multilayer structure, obtained by superposition of layers made of different materials.

6. Vehicle tyre (1) according to claim 1, wherein the air inside said inner tube (3) is at atmospheric pressure.

7. Vehicle tyre (1) according to any of the preceding claims, wherein said outer envelope (5) is made of a material having a low friction coefficient.

8. Vehicle tyre (I) according to claim 7, wherein said outer envelope (5) is made of a polyurethane-based material.

9. Vehicle tyre (1) according to any of the preceding claims, wherein said tyre is a bicycle tyre.

## Patentansprüche

1. Fahrzeugreifen (1), angeordnet zur Montage an einem mit einer Felge (10) versehenen Rad, wobei dieser Reifen umfasst:
- einen Innenschlauch (3) mit einer toroidalen Form; und
- einen äußeren Mantel (5), der diesen Innenschlauch (3) umgibt und auf einer Seite mit einem Profil (5b) und auf der gegenüberliegenden Seite mit Randen (5a) versehen ist, die ausgebildet sind, um in einem entsprechenden Sitz aufgenommen zu sein, zum Halten dieses äußeren Mantels (5) gegen diese Felge (10),
wobei der Innenschlauch ein selbsttragender Innenschlauch (3) ist, **dadurch gekennzeichnet, dass** ein Dämpfungselement (7) angrenzend an oder einstückig mit dem Innenschlauch (3) vorgesehen ist, auf der gegenüberliegenden Seite relativ zu dem Profil (5b) des äußeren Mantels (5).

2. Fahrzeugreifen (1) nach Anspruch 1, wobei das Dämpfungselement (7) ein umlaufender Toroidalring ist, der den ganzen Umfang des Innenschlauchs (3) umschlingt.

3. Fahrzeugreifen (1) nach Anspruch 1, wobei das Dämpfungselement (7) mehrere separate Elemente umfasst, die entlang dem Umfang des Innenschlauchs (3) angeordnet sind.

4. Fahrzeugreifen (1) nach irgendeinem der Ansprüche 1 bis 3, wobei das Dämpfungselement (7) aus Gummi besteht.

5. Fahrzeugreifen (1) nach irgendeinem der Ansprüche 1 bis 3, wobei das Dämpfungselement (7) einen mehrschichtigen Aufbau aufweist, die durch Überlagerung von aus verschiedenen Materialen bestehenden Schichten erreicht wird.

6. Fahrzeugreifen (1) nach Anspruch 1, wobei sich die Luft in dem Innenschlauch (3) auf Atmosphärendruck befindet.

7. Fahrzeugreifen (1) nach irgendeinem der vorhergehenden Ansprüche, wobei der äußere Mantel (5) aus einem Material besteht, das einen niedrigen Reibwert aufweist.

8. Fahrzeugreifen (1) nach Anspruch 7, wobei der äußere Mantel (5) aus einem Material auf Polyurethanbasis besteht.

9. Fahrzeugreifen (1) nach irgendeinem der vorhergehenden Ansprüche, wobei der Reifen ein Fahrradreifen ist.

## Revendications

1. Pneu de véhicule (1), destiné à être monté sur une roue de véhicule pourvue d'une jante (10), ledit pneu comprenant:
- une chambre à air intérieure (3), ayant une forme toroïdale, et
- une enveloppe extérieure (5), entourant ladite chambre à air intérieure (3) et pourvue sur un côté d'une bande de roulement (5b) et sur le côté opposé de bords (5a) aptes à être reçus dans un siège correspondant (10a) de ladite jante (10) pour maintenir ladite enveloppe extérieure (5) contre ladite jante (10),
ladite chambre à air intérieure étant une chambre à air intérieure autoportante (3), **caractérisé en ce que** un élément amortisseur (7) est prévu adjacent à ou solidaire de ladite chambre à air intérieure (3), sur le côté opposé par rapport à la bande de roulement (5b) de ladite enveloppe extérieure (5).

2. Pneu de véhicule (1) selon la revendication 1, dans lequel ledit élément amortisseur (7) est une bague toroïdale continue, s'enroulant autour de toute la circonférence de ladite chambre à air intérieure (3).

3. Pneu de véhicule (1) selon la revendication 1, dans lequel ledit élément amortisseur (7) comprend une pluralité d'éléments discrets disposés le long de la circonférence de ladite chambre à air intérieure (3).

4. Pneu de véhicule (1) selon l'une quelconque des revendications 1 à 3, dans lequel ledit élément amortisseur (7) est fait de caoutchouc.

5. Pneu de véhicule (1) selon l'une quelconque des revendications 1 à 3, dans lequel ledit élément amortisseur (7) présente une structure multicouche, obtenue par superposition de couches faites de matériaux différents.

6. Pneu de véhicule (1) selon la revendication 1, dans lequel l'air à l'intérieur de ladite chambre à air intérieure (3) est à la pression atmosphérique.

7. Pneu de véhicule (1) selon l'une quelconque des revendications précédentes, dans lequel ladite enveloppe extérieure (5) est faite d'un matériau ayant un faible coefficient de frottement.

8. Pneu de véhicule (1) selon la revendication 7, dans lequel ladite enveloppe extérieure (5) est faite d'un matériau à base de polyuréthane.

9. Pneu de véhicule (1) selon l'une quelconque des revendications précédentes, dans lequel ledit pneu est un pneu de vélo.
